# EUROPEAN PATENT APPLICATION

(11) **EP 2 650 153 A1**
(43) Date of publication of application: **16.10.2013**
(21) Application number: 11847295.0
(22) Date of filing: 06.12.2011
(51) Int. Cl.: B60H 1/00, B60H 1/34

(54) **AIR CONDITIONING SYSTEM FOR VEHICLE**

(30) Priority: 09.12.2010 JP 2010274494; 09.12.2010 JP 2010274501
(71) Applicant: Calsonic Kansei Corporation, Saitama-shi, Saitama 331-8501 (JP)
(72) Inventor: YAJIMA, Toshio, Saitama-shi Saitama 331-8501 (JP); FUJITA, Takashi, Saitama-shi Saitama 331-8501 (JP)
(74) Representative: Grünecker, Kinkeldey, Stockmair & Schwanhäusser
(86) International application number: PCT/JP2011/078162
(87) International publication number: WO 2012/077670

(57) **Abstract**

An air-condition system for a vehicle includes an air-conditioner having a main blower, a main duct and a heat exchanger to convert air suctioned into the main duct into conditioned air by the heat exchanger and to blow out the conditioned air into a passenger compartment, a suction port disposed near a seat for an occupant, and a sub duct of which one end is connected to the suction port to suction air from the suction port, wherein the air-conditioner suctions air that has been suctioned into the sub duct into the main duct, and blows the air into the passenger compartment again. According to the air-condition system, the conditioned air blown out into the passenger compartment by the air-conditioner is suctioned from the suction port disposed near the seat for an occupant. Therefore, the conditioned air is recovered and a flow of conditioned air backward from the suction port is restricted, so that comfortable zone air-conditioning can be done. Since desired-temperature conditioned air can be generated by the heat exchanger during a zone air-conditioning mode, it is unnecessary to provide a heat exchanger used only for zone air-conditioning and thereby simplicity of the system configurations and cost reduction can be brought.

## Description

### TECHNICAL FIELD

The present invention relates to an air-condition system for a vehicle that can execute zone air-conditioning (personal air-conditioning) in which some areas of a passenger compartment (e.g. an area around an occupant) are set as an air-conditioning zone.

### BACKGROUND ART

As an air-condition system for a vehicle, proposed is a zone air-conditioning system that does not air-condition an entire in a passenger compartment but air-conditions only in an area around a passenger. A Patent Document 1 listed below discloses a prior-art zone air-condition system. As shown in Fig. 15, the air-condition system 100 for a vehicle disclosed in the Patent Document 1 includes a suction port 102 opened on a top face of a seat cushion 101a of a seat 101, a blow-out port 103 opened above a headrest 101c of the seat 101, and a duct 104 communicating the suction port 102 with the blow-out port 103. A blower 105, an evaporator 106 and a heater 107 are provided on a blow passageway in the duct 104.

Interior air is suctioned from the suction port 102, and the suctioned air is made into desired-temperature conditioned air by the evaporator 106 and the heater 107. The conditioned air is blown out from the blow-out port 103. The blown-out conditioned air passes around an occupant, and then it is suctioned from the suction port 102 again. By such a circulation of the conditioned air, a flow of conditioned air near an occupant is made to establish zone air-conditioning. Quick cooling performance and quick heating performance can be improved by the zone air-conditioning.

A Patent Document 2 listed below discloses another prior-art zone air-condition system. As shown in Fig. 16, the air-condition system 110 for a vehicle disclosed in the Patent Document 2 includes a main air-conditioner (not shown) disposed within an instrument panel, and an in-seat air-conditioner 111. The in-seat air-conditioner 111 includes first suction ports 113 opened at an upper portion of a seatback 112b of a seat 112, a first blow-out port 114 opened at a lower portion of the seatback 112b, a first blow passageway 115 communicating the first suction ports 113 with the first blow-out port 114, a second suction port 120 opened on a bottom face of a seat cushion 112a, second blow-out ports 121 opened on a top face of the seat cushion 112a, and a second blow passageway 122 communicating the second suction port 120 with the second blow-out ports 121. A blower 116 and a heat exchanger 117 are provided on the first blow passageway 122, and a blower 123 and a heat exchanger 124 are provided on the second blow passageway 122. An end of a duct 130 extended from the main air-conditioner is opened below the second suction port 120.

Desired-temperature conditioned air from the main air-conditioner is blown out into a passenger compartment from a forefront of the passenger compartment. The blown-out conditioned air passes around an occupant, and it is suctioned from the first suction ports 113 to be recovered. Therefore, a flow of conditioned air toward a rear section of the passenger compartment behind the first suction ports 113 can be restricted. The conditioned air suctioned from the first suction ports 113 passes through the heat exchanger 117, and then it is blown out into the passenger compartment from the first blow-out port 114. In addition, desired-temperature conditioned air from the main air-conditioner is blown out toward the bottom face of the seat cushion 112a from the duct 130. The conditioned air suctioned from the second suction port 120 passes through the heat exchanger 124, and thereby it is blown out into the passenger compartment from the second blow-out ports 121. The conditioned air blown out from the first blow-out port 114 and the second blow-out ports 121 is discharged into the passenger compartment from a vicinity of the occupant, and then returned to the main air-conditioner again after mixed with non-conditioned air. By such a circulation of the conditioned air, a strong flow of conditioned air near a passenger is made to establish zone air-conditioning. Quick cooling performance and quick heating performance can be improved by the zone air-conditioning.

### Prior Art Document

### Patent Documents

Patent Document 1: Japanese Granted Patent No. 3301109 (Japanese Patent Application Laid-Open No. H5-286346
Patent Document 2: Japanese Patent Application Laid-Open No. 2007-126047

### SUMMARY OF INVENTION

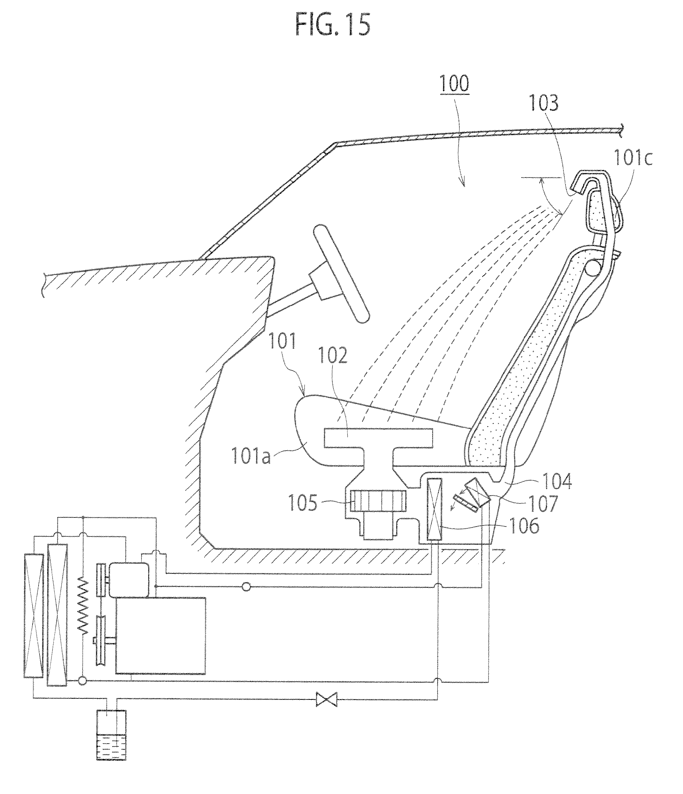

However, in the above-explained air-condition system 100 shown in Fig. 15, it is needed to provide the evaporator 106 and the heater 107 used only for the zone air-conditioning, so that complexity and high-cost of the system is subject to be brought.

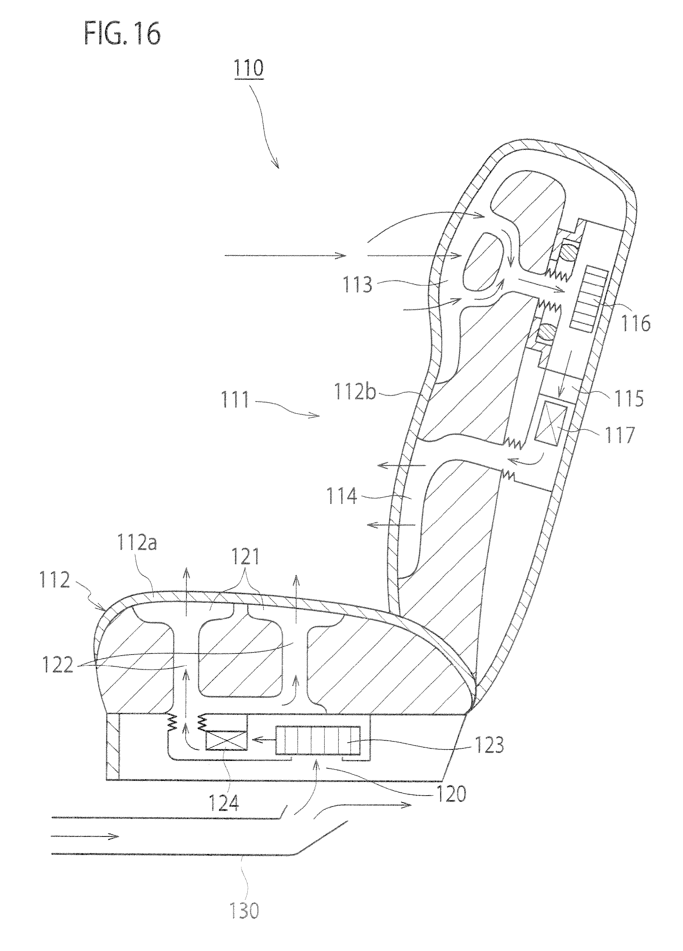

In addition, in the above-explained air-condition system 110 shown in Fig. 16, the conditioned air is generated by using a heat exchanger in the main air-conditioner (not shown). Further, the conditioned air blown out from the first blow-out port 114 and the second blow-out ports 121 is flown through the passenger compartment and then returned to the main air-conditioner only by a suctioning force of an interior air intake port(s) of the main air-conditioner. Since the conditioned air that has lost much heat during flowing through the passenger compartment is returned to the main air-conditioner, a load to the main air-conditioner becomes large and thereby it is hard to get an energy-saving effect. Furthermore, the conditioned air blown out from the first blow-out port 114 and the second blow-out ports 121 is most likely to be suctioned from the first suction ports 113 and the second suction port 120 on the seat 112 that are opened at a closer position than the interior air induction port(s) of the main air-conditioner, so that the conditioned air conditioned air blown out from the first blow-out port 114 and the second blow-out ports 121 is not returned to the main air-conditioner. Therefore, if the heat exchangers 117 and 124 of the in-seat air-conditioner 111 are not provided, a circulation flow of interior air without desired temperature may be formed. Namely, the heat exchangers 117 and 124 of the in-seat air-conditioner 111 are necessary in order to achieve comfortable zone air-conditioning by preventing the circulation flow of interior air without desired temperature, so that complexity and high-cost of the system is subject to be brought.

Therefore, an object of the present invention is to provide an air-condition system for a vehicle that can bring simplicity of the system configurations and cost reduction and achieve comfortable zone air-conditioning.

An aspect of the present invention provides an air-condition system for a vehicle that includes an air-conditioner that has a main blower, a main duct and a heat exchanger, and is configured to convert air suctioned into the main duct into desired conditioned air by the heat exchanger and to blow out the conditioned air into a passenger compartment; a suction port disposed near a seat for an occupant; and a sub duct of which one end is connected to the suction port to suction air from the suction port, wherein the air-conditioner suctions air that has been suctioned into the sub duct into the main duct, and blows the air into the passenger compartment again.

According to the aspect, the air-conditioner suctions air that has been sectioned in the sub duct into the main duct, and blows the air into the passenger compartment again. Namely, the conditioned air blown out into the passenger compartment by the air-conditioner is suctioned from the suction port disposed near the seat. Therefore, the conditioned air is recovered and a flow of conditioned air backward from the suction port is restricted, so that comfortable zone air-conditioning can be done. Since desired-temperature conditioned air can be generated by the heat exchanger during a zone air-conditioning mode, it is unnecessary to provide a heat exchanger used only for zone air-conditioning and thereby simplicity of the system configurations and cost reduction can be brought.

Here, it is preferable that another end of the sub duct is connected to the main duct, and the suction port and the main duct are communicated with each other by the sub duct.

According to this, the conditioned air suctioned from the suction port is returned to the air-conditioner through the sub duct. By such a circulation of the conditioned air, a comfortable flow of the conditioned air is formed around an occupant, so that comfortable zone air-conditioning can be established.

In addition, the conditioned air suctioned from the suction port flows in the sub duct on a whole return path to the air-conditioned, so that it is returned to the air-conditioned while its heat loss is restricted as much as possible. As a result, air-conditioning load to the air-conditioner reduces. Further, since the conditioned air suctioned from the suction port is never blown out into the passenger compartment, it doesn't occur that, like as the air-condition system 110 shown in Fig. 16, a circulation flow without desired temperature is formed around occupants.

Alternatively, it is preferable that the system further includes a sub blower for introducing air from the suction port into the sub duct, wherein another end of the sub duct is opened near the air-conditioner to form an opening.

According to this, the conditioned air suctioned from the suction port flows through the sub duct by a suctioning force of the sub blower, and then it is returned to the air-conditioner after blown out from the opening near the air-conditioner. By such a circulation of the conditioned air, a comfortable flow of the conditioned air is formed around an occupant, so that comfortable zone air-conditioning can be established.

In addition, the conditioned air suctioned from the suction port flows in the sub duct on a large portion of a return path to the air-conditioned, so that it is returned to the air-conditioned 11 while its heat loss is restricted as much as possible. As a result, air-conditioning load to the air-conditioner reduces. Further, since the conditioned air suctioned from the suction port is blown out into the passenger compartment from the opening near the air-conditioner, it doesn't occur that, like as the air-condition system 110 shown in Fig. 16, a circulation flow without desired temperature is formed around occupants.

### BRIEF DESCRIPTION OF DRAWINGS

**[****Fig. 1****]** It is a schematic side view of an air-condition system according to a first embodiment.
**[****Fig. 2****]** It is a schematic plan view of the air-condition system according to the first embodiment.
**[****Fig. 3****]** It is a schematic configurations diagram of the air-condition system according to the first embodiment.
**[****Fig. 4****]** It is a schematic side view of an air-condition system according to a second embodiment.
**[****Fig. 5****]** It is a schematic configuration diagram of the air-condition system according to the second embodiment.
**[****Fig. 6****]** It is a schematic side view of an air-condition system according to a third embodiment.
**[****Fig. 7****]** It is a schematic plan view of the air-condition system according to the third embodiment.
**[****Fig. 8****]** It is a schematic plan view of an air-condition system according to a fourth embodiment.
**[****Fig. 9****]** It is a schematic side view of an air-condition system according to a fifth embodiment.
**[****Fig. 10****]** It is a schematic plan view of the air-condition system according to the fifth embodiment.
**[****Fig. 11****]** It is a schematic configuration diagram of the air-condition system according to the fifth embodiment.
**[****Fig**. **12****]** It is a schematic side view of an air-condition system according to a sixth embodiment.
**[****Fig. 13****]** It is a schematic plan view of the air-condition system according to the sixth embodiment.
**[****Fig. 14****]** It is a schematic plan view of the air-condition system according to a seventh embodiment.
**[****Fig. 15****]** It is a schematic cross-sectional view of a prior-art air-condition system.
**[****Fig. 16****]** It is a schematic cross-sectional view of another prior-art air-condition system.

### DESCRIPTION OF EMBODIMENTS

Hereinafter, embodiments will be explained based on the drawings.

### (First Embodiment)

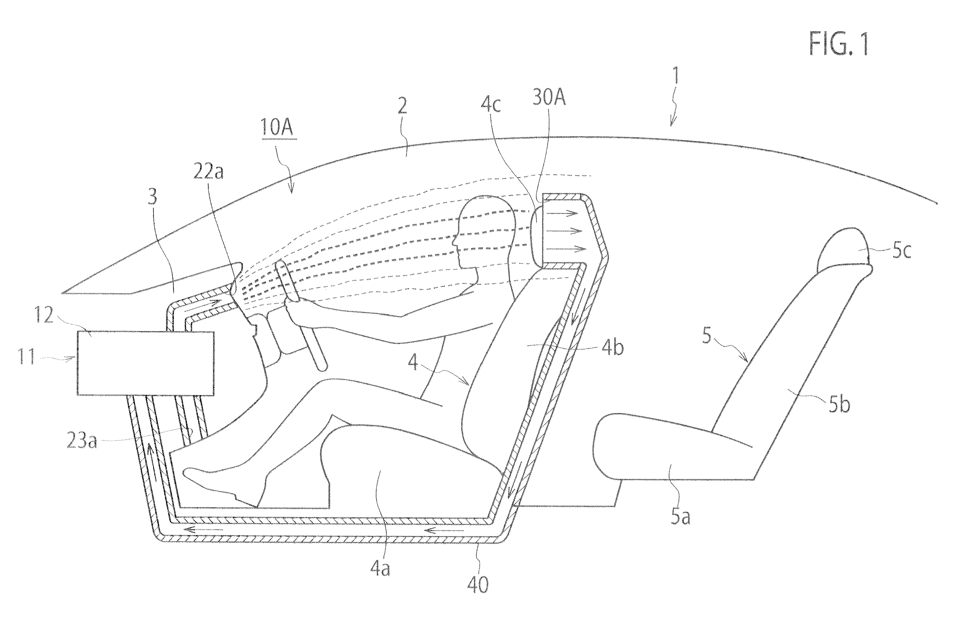

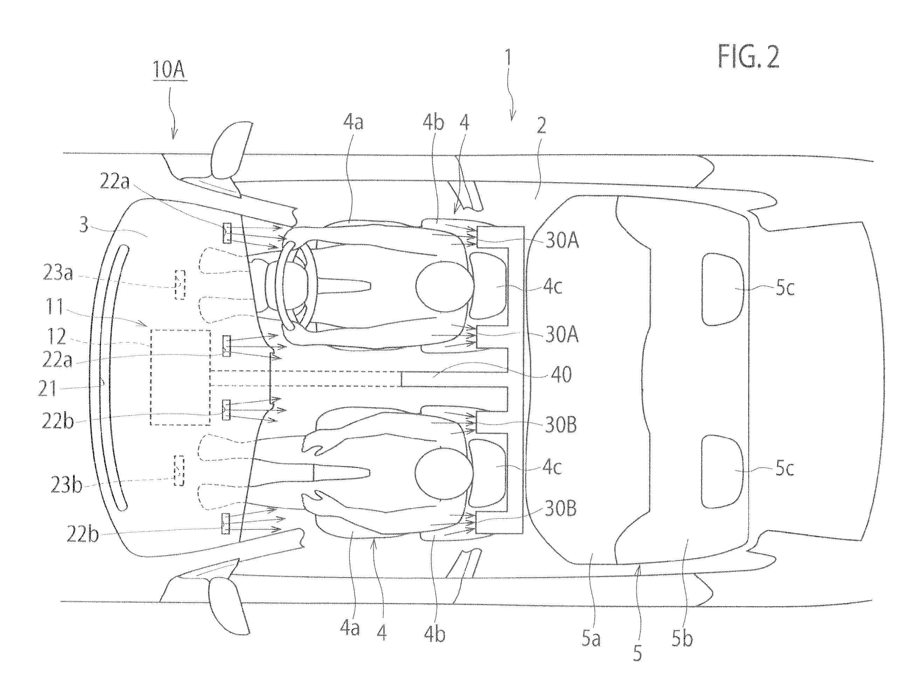

Fig. 1 to Fig. 3 show an air-condition system 10A according to a first embodiment. As shown in Fig. 1 and Fig. 2, a vehicle 1 has an instrument panel at a forefront in a passenger compartment 2. Two front seats (a driver seat and a passenger seat) 4 and one long rear seat 5 are provided in the passenger compartment 2. Each of the front seats 4 has a seat cushion 4a, a seatback 4b, and a headrest 4c. The rear seat 5 has a seat cushion 5a, a seatback 5b, and two headrests 5c.

As shown in Fig. 1 to Fig. 3, the air-condition system 10A includes an air-conditioner 11, suction ports 30A and 30B provided near the front seats 4, respectively, and a sub-duct 40 that communicates these suction ports 30A and 30B with a main duct 13 of the air-conditioner 11. A blow passageway is formed in the inside of the main duct 13.

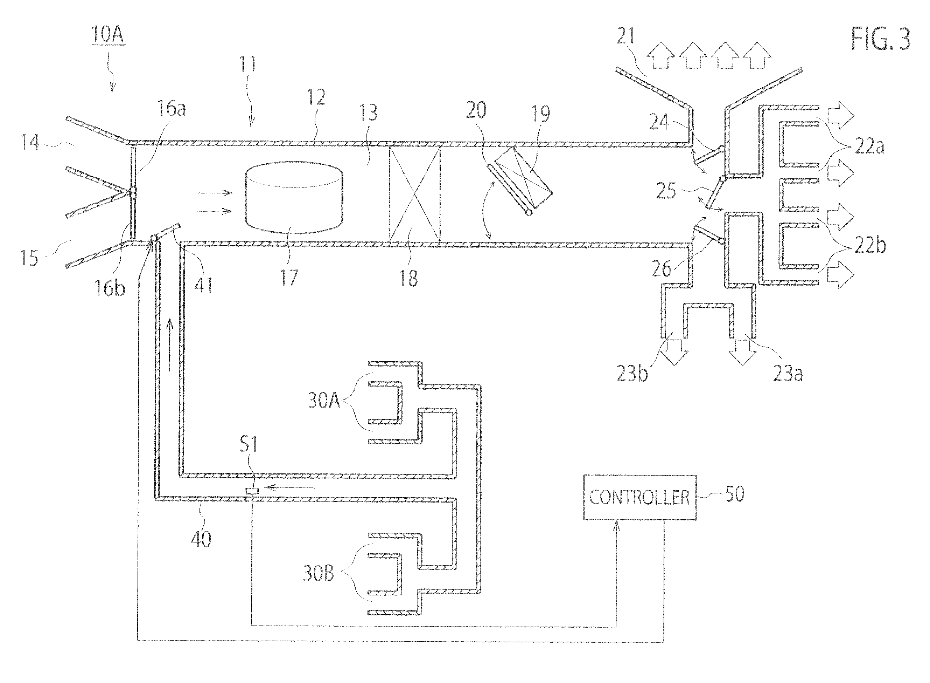

The air-conditioner 11 has an air-conditioning unit 12 disposed within the instrument panel 3. As shown in Fig. 3, the main duct 13 is provided in the air-conditioning unit 12. An outside air intake port 14 for introducing air outside the passenger compartment 2 (outside air) and an interior air intake port 15 for introducing air inside the passenger compartment 2 (interior air) are provided at a most upstream end of the main duct 13. The outside air intake port 14 can be opened/closed by an intake door 16a, and the interior air intake port 15 can be opened/closed by an intake door 16b.

In the main duct 13, a blower 17, an evaporator (heat exchanger) 18, and a heater core (heat exchanger) 19 are arranged in this order from upstream. The evaporator 18 is a cooling source, and the heater core 19 is a heating source. A mixture door 20 is disposed between the evaporator 18 and the heater core 19.

The blower 17 suctions interior air or outside air into the main duct 13 by rotating its fan. The evaporator 18 is arranged so that entire air flowing through the main duct 13 passes therethrough, and cools the air. The heater core 19 is arranged so as to occupy a half of the cross-section of the main duct 13, and heats the air. The mixture door 20 adjusts ratio of an air volume passing through the heater core 19 to an air volume bypassing the heater core 19. Desired-temperature conditioned air is generated by changing this air volume ratio.

A defroster blow-out port 21, vent blow-out ports 22a and 22b, and foot blow-out ports 23a and 23b are provided downstream from the heater core 19. The defroster blow-out port 21 blows out conditioned air to a front glass windshield. The vent blow-out ports 22a and 22b are comprised of the vent blow-out ports 22a for a driver seat and the vent blow-out ports 22b for a passenger seat, and blow out conditioned air toward upper bodies of occupants. The foot blow-out ports 23a and 23b are comprised of the foot blow-out port 23a for a driver seat and the foot blow-out port 23b for a passenger seat, and blow out conditioned air toward lower bodies of occupants. The defroster blow-out port 21 is opened/closed by a defroster door 24. The vent blow-out ports 22a and 22b are opened/closed by a vent door 25. The foot blow-out ports 23a and 23b are opened/closed by a foot door 26.

As shown in Fig. 1 and Fig. 2, the suction ports 30A for the right front seat 4 (or the suction ports 30B for the left front seat 4) are disposed at an upper portion of the seatback 4b and on both sides of the headrest 4c. Total four of the suction ports 30A and 30B are opened just behind upper bodies of occupants on the front seats 4.

As show in Fig. 3, one end of the sub duct 40 is connected with the suction ports 30A and 30B. Another end of the sub duct 40 is connected to the main duct 13 at a position upstream from the blower 17. A selector door 41 is disposed at a connected position of the sub duct 40 with the main duct 13. The selector door 41 can shut communication of the inside of the sub duct 40 with the inside of the main duct 13. Operations of the selector door 40 are controlled by a controller 50.

In addition, a temperature sensor S1 is disposed in the sub duct 40. The temperature sensor S1 detects temperature of conditioned air suctioned from the suction ports 30A and 30B. Detection data of the temperature sensor S1 are output to the controller 50.

Various commands (settings) concerning air-conditioning are input to an operational panel (not shown). Through the operational panel, selected can be an entire air-conditioning mode for conditioning air of a whole space in the passenger compartment or a zone air-condition mode for preferentially conditioning air of a space around front seats.

The controller 50 controls operations of the air-conditioner 11 and switching of the selector door 50 according to the commands or the like from the operational panel. When the entire air-conditioning mode is selected, the controller 50 closes the selector door 41, and controls blow-oust temperature and so on by using a temperature sensor (not shown), disposed near the instrument panel 3, of the air-conditioner 11. On the other hand, when the zone air-conditioning mode is selected, the controller 50 opens the selector door 41, and controls blow-out temperature and so on by using the temperature sensor S1 in the sub duct 40.

Behaviors of the above-explained air-condition system 10A will be explained. When the air-conditioner 11 is operated, air is suctioned, by the blower 17, into the main duct 13 from the outside air intake port 14 or the interior air intake port 15. The suctioned air is turned into desired-temperature conditioned air by the evaporator 18 and the heater core 19, and then the conditioned air is blown out into the passenger compartment 2 from at least one of the blow-out ports 21, 22a, 22b, 23a and 23b (e.g. the vent blow-out ports 22a and 22b).

During the entire air-conditioning mode, the selector door 41 is closed. Due to this, the conditioned air is not suctioned from the suction ports 30A and 30B. Therefore, the conditioned air blown out, by the air-conditioner 11, into the passenger compartment 2 forms a flow extending to almost an entire area in the passenger compartment 2, so that air in an entire of the passenger compartment 2 is conditioned.

On the other hand, during the zone air-conditioning mode is selected, the selector door 41 is opened. Due to this, the conditioned air is suctioned, by a suctioning force of the blower 17, from the suction ports 30A and 30B. Therefore, the conditioned air blown out into the passenger compartment 2 from the air-conditioner 11 is sectioned from the suction ports 30A and 30B on the front seats 4. The sectioned conditioned air is returned to the air-conditioning unit 12 through the sub duct 40. As shown in Fig. 1 and Fig. 2, the conditioned air flows around occupants on the front seats 4 intensively (preferentially), and then it is recovered from the suction ports 30A and 30B. A flow of conditioned air toward a rear section of the passenger compartment behind the suction ports 30A and 30B is also restricted. As a result, the zone air-conditioning zone is formed around the front seats 4 in the passenger compartment 2.

Since desired-temperature conditioned air is generated by using the evaporator 18 and the heater core 19 of the air-conditioning unit 12 in the zone air-conditioning mode, it is unnecessary to provide a heat exchanger (s) used only for the zone air-conditioning and thereby simplicity of the system configurations and cost reduction can be brought. The conditioned air sectioned from the suction ports 30A and 30B flows in the sub duct 40 on a whole return path to the air-conditioned 11, so that it is returned to the air-conditioned 11 while loss of heat (including temperature and humidity) is restricted as much as possible. As a result, air-conditioning load to the air-conditioner 11 reduces. Further, since the conditioned air suctioned from the suction ports 30A and 30B is never blown out into the passenger compartment 2, a circulation flow without desired temperature is not formed around occupants.

Therefore, according to the air-condition system 10A, simplicity of the system configurations and cost reduction can be brought. In addition, comfortable zone air-conditioning can be done while realizing energy-saving due to reduction of air-conditioning load. Furthermore, quick cooling performance and quick heating performance can be improved by zone air-conditioning.

In a vehicle in which an air-conditioned has been already equipped, the above embodiment can be realized by only providing the suction ports 30A and 30B and the sub duct 40, so that it can be easily installed later on.

In addition, since the selector door 41 for shutting the communication of the inside of the sub duct 40 with the inside of the main duct 13 is provided, the entire air-conditioning mode and the zone air-conditioning mode can be carried out selectively by using the selector door 41. Further, the entire air-conditioning mode and the zone air-conditioning mode can be easily changed over by only controlling operations of the selector door 41.

In addition, since the other end of the sub duct 40 is connected to the main duct 13 at a position upstream from the blower 17, it can be possible to suction the conditioned air from the suction ports 30A and 30B by using a suctioning force of the blower 17. Therefore, it is not needed to additionally provide a blower only for suctioning from the suction ports 30A and 30B. As a result, further simplicity of the system configurations and lower-cost can be brought.

Note that a sub blower only for suctioning from the suction ports 30A and 30B may be provided in the sub duct 40. According to this configuration, it is possible to suction the conditioned air into the sub duct 40 reliably.

In addition, the suction ports 30A and 30B are disposed on the front seats 4. Since the front seats 4 are conventional parts inevitably installed, they are the most appropriate for installation of the suction ports 30A and 30B and It is easy to dispose the suction ports 30A and 30B thereon.

Further, the suction ports 30A and 30B are disposed at the upper portions of the seatbacks 4b. Airflows blown out from the vent blow-out ports 22a and 22b are flown toward a vicinity of heads and upper bodies of occupants. And, warm air blown out from the foot vent blow-out ports 23a and 23b forms airflows from beneath toward above in the passenger compartment 2. Therefore, the conditioned air can be suctioned efficiently by the suction ports 30A and 30B disposed at the upper portions of the seatbacks 4b.

Furthermore, the temperature sensor S1 for detecting temperature of the conditioned air suctioned from the suction ports 30A and 30B is provided. Therefore, during the zone air-conditioning mode, temperature or the like of conditioned air to be blown out from the air-conditioner 11 can be controlled based on the temperature of the conditioned air that has actually passed through a vicinity of occupants, so that air-conditioning temperature can be controlled adequately.

### (Second Embodiment)

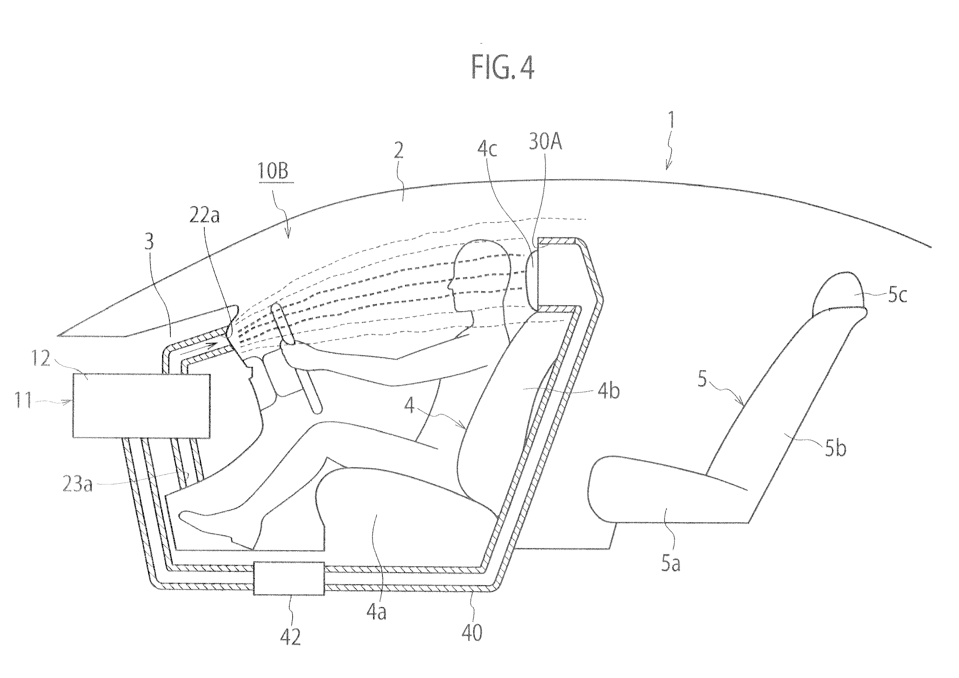

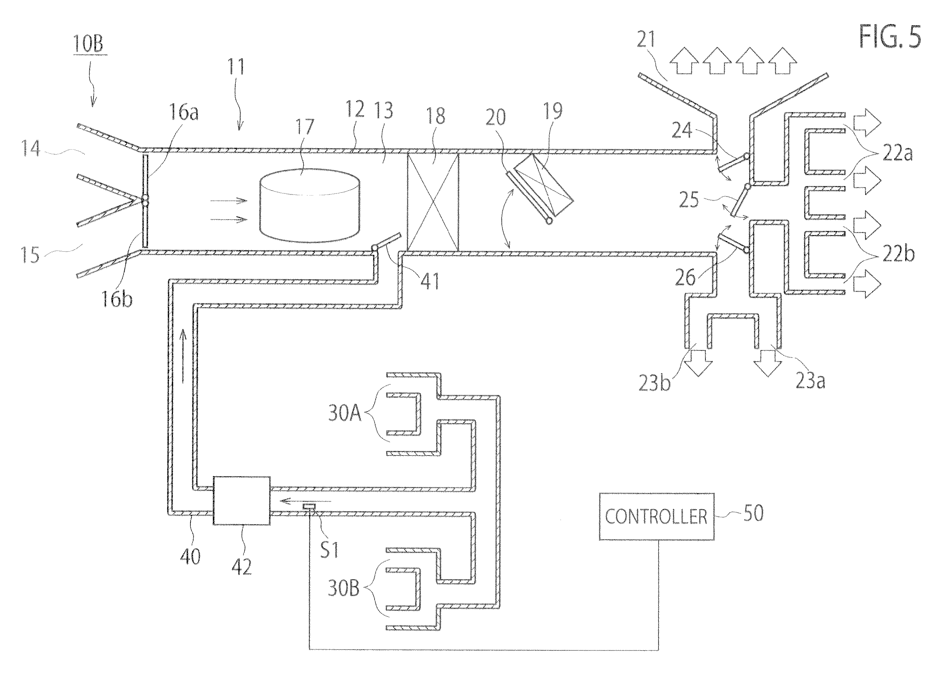

Fig. 4 and Fig. 5 show an air-condition system 10B according to a second embodiment of the present invention. As shown in Fig. 4 and Fig. 5, the other end of the sub duct 40 is different from that in the above-explained air-condition system 10A according to the first embodiment. The other end of the sub duct 40 is connected to the main duct 13 at a position between the blower 17 and the evaporator 18. Then, a sub blower 42 for sectioning air from the suction ports 30A and 30B is disposed on the sub duct 40. The sub blower 42 is controlled by the controller 50.

Identical or equivalent components to those in the first embodiments will be labeled with identical reference numbers and their redundant explanations will be omitted.

Behaviors of the above-explained air-condition system 10B will be explained. When the air-conditioner 11 is operated, air is suctioned, by the blower 17, into the main duct 13 from the outside air intake port 14 or the interior air intake port 15. The suctioned air is turned into desired-temperature conditioned air by the evaporator 18 and the heater core 19, and then the conditioned air is blown out into the passenger compartment 2 from at least one of the blow-out ports 21, 22a, 22b, 23a and 23b (e.g. the vent blow-out ports 22a and 22b).

During the entire air-conditioning mode, the selector door 41 is closed and the sub blower 42 is not operated. Due to this, the conditioned air is not suctioned from the suction ports 30A and 30B. Therefore, the conditioned air blown out, by the air-conditioner 11, into the passenger compartment 2 forms a flow extending to almost an entire area in the passenger compartment 2, so that air in an entire of the passenger compartment 2 is conditioned.

On the other hand, during the zone air-conditioning mode is selected, the selector door 41 is opened and the sub blower 42 is operated. Due to this, the conditioned air is suctioned, by a suctioning force of the sub blower 42, from the suction ports 30A and 30B. Therefore, the conditioned air blown out into the passenger compartment 2 from the air-conditioner 11 is suctioned from the suction ports 30A and 30B on the front seats 4. The suctioned conditioned air is returned to the air-conditioning unit 12 through the sub duct 40. As shown in Fig. 4, the conditioned air flows around the front seats 4 intensively (preferentially), and then it is recovered from the suction ports 30A and 30B. A flow of conditioned air toward a rear section of the passenger compartment behind the suction ports 30A and 30B is also restricted. As a result, a zone air-conditioning zone is formed around the front seats 4 in the passenger compartment 2.

Therefore, according to the air-condition system 10A, simplicity of the system configurations and cost reduction can be brought similarly to the first embodiment. In addition, comfortable zone air-conditioning can be done while realizing energy-saving due to reduction of air-conditioning load. Furthermore, quick cooling performance and quick heating performance can be improved by zone air-conditioning.

Further, since the sub blower 42 is provided in addition to the selector door 41, the entire air-conditioning mode and the zone air-conditioning mode can be carried out selectively by controlling the selector door 41 and the sub blower 42.

Since the sub blower 42 is provided in the second embodiment, a suctioning volume through the suction ports 30A and 30B can be adjusted independently from a blowing volume by the air-conditioner 11.

### (Third Embodiment)

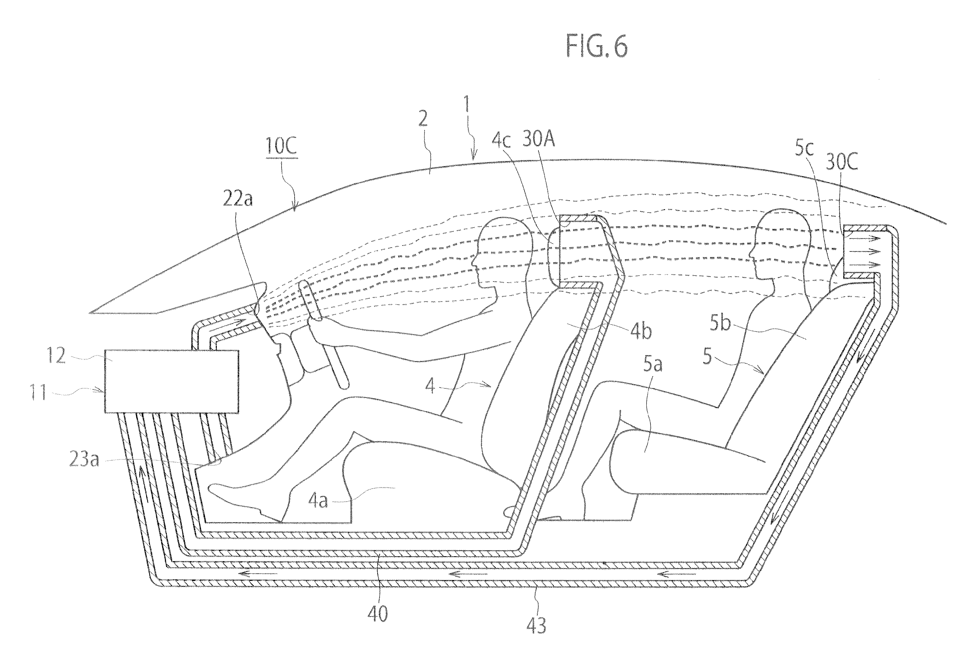

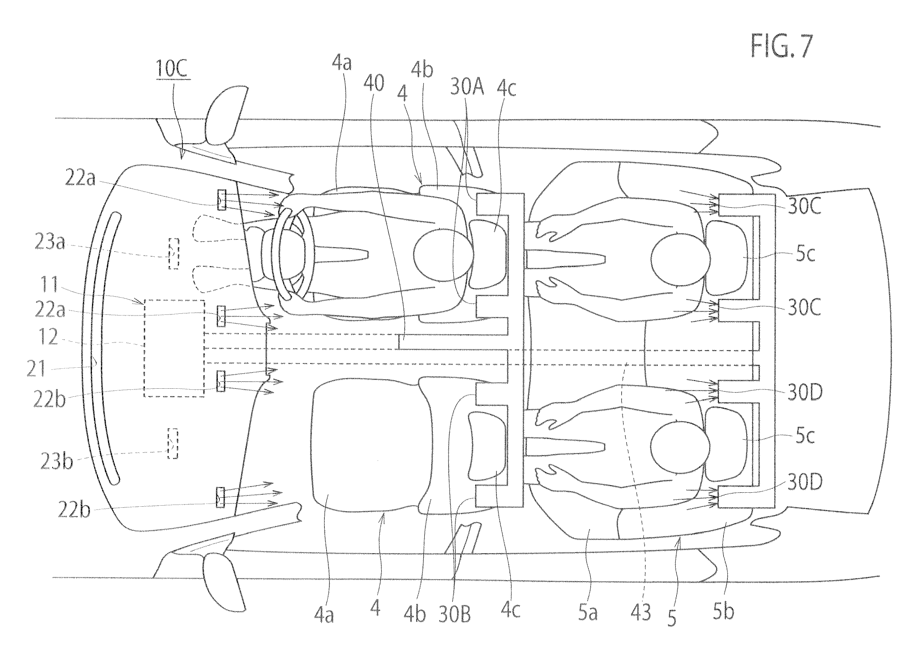

Fig. 6 and Fig. 7 show an air-condition system 10C according to a third embodiment. As shown in Fig. 6 and Fig. 7, the air-condition system 10C further includes suction ports 30C and 30D provided near the rear seat (s) 5, and a sub duct 43 that communicates these suction ports 30C and 30D with the main duct 13 (see Fig. 3) of the air-conditioner 11, in addition to the system configurations of the first embodiment.

Identical or equivalent components to those in the first embodiments will be labeled with identical reference numbers and their redundant explanations will be omitted.

The suction ports 30C for the right rear seat 5 (or the blow-out ports 30D for the left rear seat 5) are disposed at an upper portion of the seatback 5b and on both sides of the headrest 5c. Total four of the suction ports 30C and 30D are opened just behind upper bodies of occupants on the rear seats 5.

The other end of the sub duct 43 is also connected to the main duct 13 at a position upstream from the blower 17 (see Fig. 3). A selector door (not shown: equivalent to the selector door 41) is disposed at a connected position of the sub duct 43 with the main duct 13. This selector door can shut communication of the inside of the sub duct 43 with the inside of the main duct 13, too. Operations of this selector door are also controlled by the controller 50 (see Fig. 1).

Behaviors of the above-explained air-condition system 10C will be explained. During the zone air-conditioning mode, the conditioned air is suctioned from the suction ports 30A and 30B, so that the zone air-conditioning zone is formed around the front seats 4 in the passenger compartment 2, as explained in the first embodiment. In addition, as shown in Fig. 6 and Fig. 7, the conditioned air is suctioned from the suction ports 30C and 30D, so that a zone air-conditioning zone is also formed around the rear seats 5 in the passenger compartment 2. Therefore, the conditioned air blown out into the passenger compartment 2 from the air-conditioner 11 passes around occupants on the front seats 4, and then it is suctioned from the suction ports 30C and 30D as well. The suctioned conditioned air is returned to the air-conditioning unit 12 through the sub duct 43. The conditioned air flows around the rear seats 5, in addition to the front seats 4, intensively (preferentially), and then it is recovered from the suction ports 30C and 30D. A flow of conditioned air toward a rear section of the passenger compartment behind the suction ports 30C and 30D is restricted. As a result, the zone air-conditioning zone is formed around the front seats 4 and the rear seats 5 in the passenger compartment 2.

Note that, similarly to the second embodiment shown in Fig. 5, the other end of the sub duct 43 may be connected to the main duct 13 at a position between the blower 17 and the evaporator 18. In this case, the sub blowers 42 are provided on the sub ducts 40 and 43, respectively (see Fig. 5: the blower on the sub duct 43 is not shown).

The air-condition system 10C according to the present embodiment is especially effective for a vehicle with the passenger compartment 2 having a large volumetric capacity, such as a box-shaped van.

### (Fourth Embodiment)

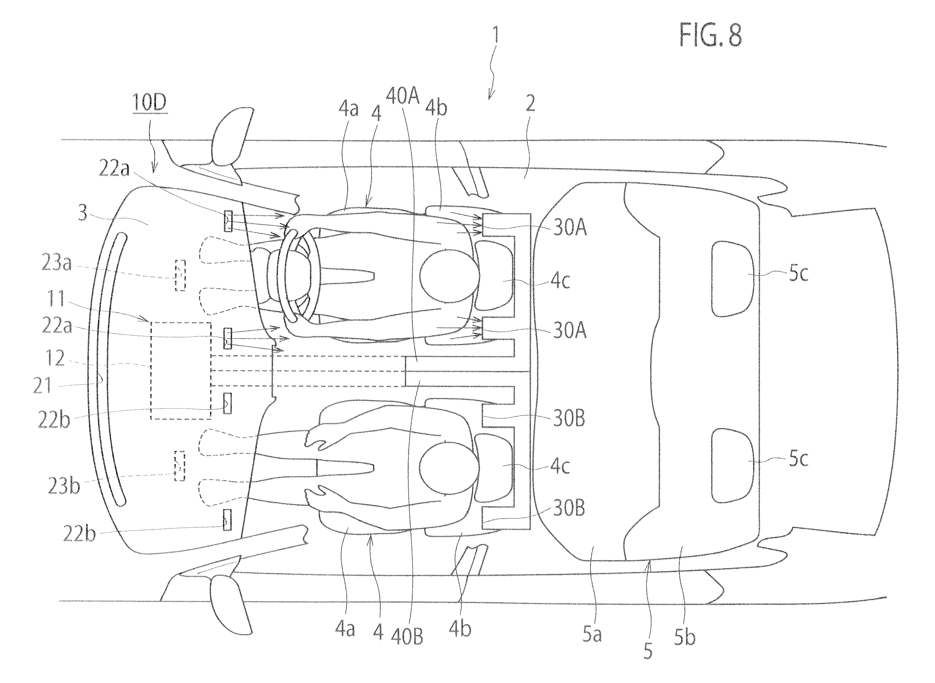

Fig. 8 shows an air-condition system 10D according to a fourth embodiment of the present invention. As shown in Fig. 8, the air-condition system 10D is different from the above-explained air-condition system 10A of the first embodiment in that the suction ports 30A on the right front seat 4 and the suction ports 30B on the left front seat 4 are connected with the main duct 13 (see Fig. 3) by sub ducts 40A and 40B that are independent from each other, respectively.

Identical or equivalent components to those in the first embodiments will be labeled with identical reference numbers and their redundant explanations will be omitted.

Selector doors (not shown: equivalent to the selector door 41) are disposed at connected positions of the sub ducts 40A and 40B with the main duct 13, respectively. These selector doors can shut communication of the insides of the sub ducts 40A and 40B with the inside of the main duct 13, respectively. Operations of these selector doors are also controlled by the controller 50 (see Fig. 1).

In the present embodiment, it can be possible to form the zone air-conditioning zone around the both left and right front seats 4, to form the zone air-conditioning zone around only the right front seat 4 (a state shown in Fig. 8), or to form the zone air-conditioning zone around only the left front seat 4.

In addition, the other ends of the two sub ducts 40A and 40B may be connected to the main duct 13, respectively, at positions between the blower 17 and the evaporator 18. In this case, the sub blowers 42 (see Fig. 5) are provided on the sub ducts 40A and 40B, respectively.

### (Fifth Embodiment)

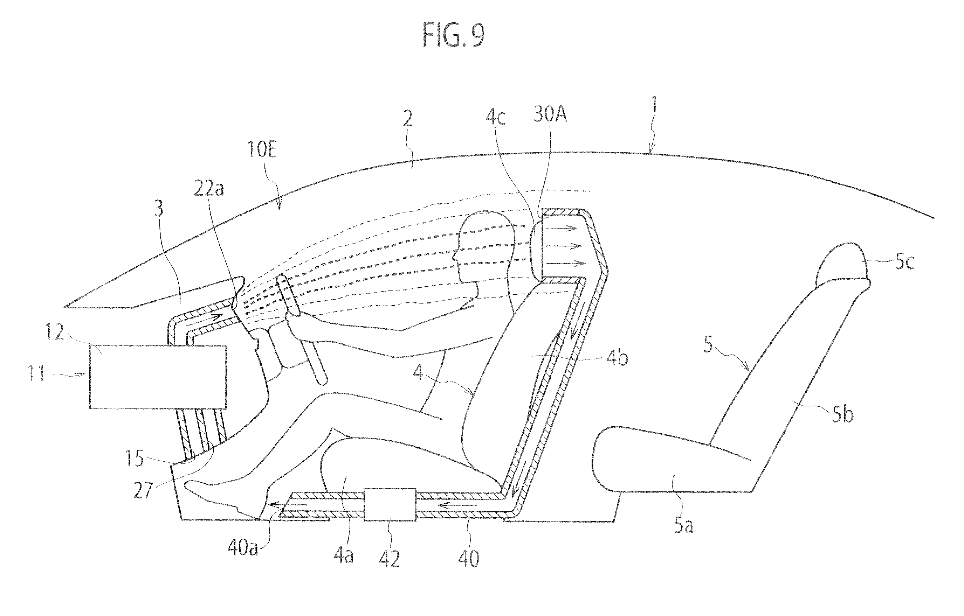

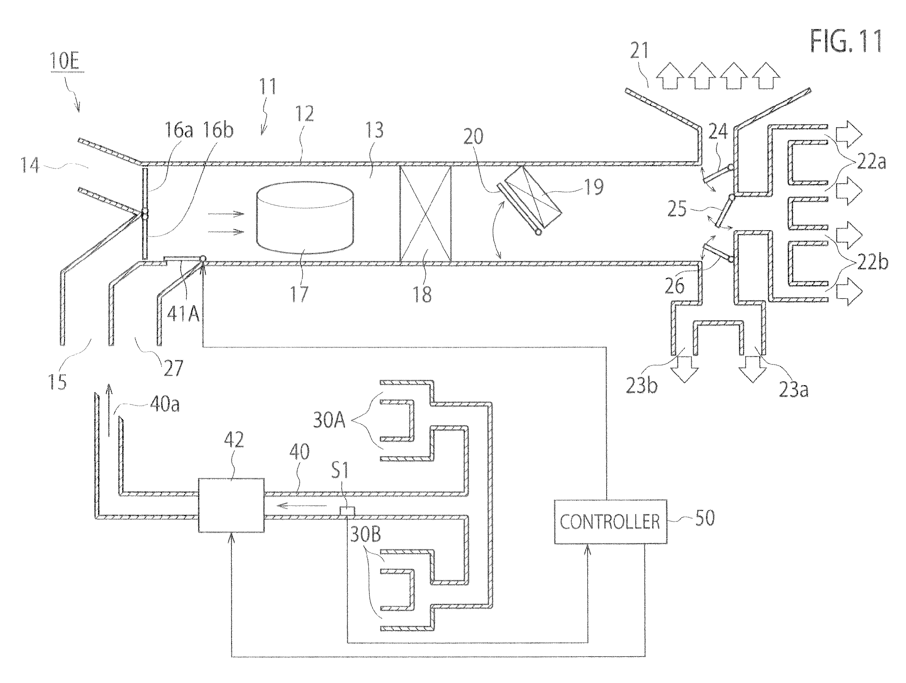

Fig. 9 to Fig. 11 show an air-condition system 10E according to a fifth embodiment. As shown in Fig. 9 to Fig. 11, the air-condition system 10E is different from the above-explained air-condition system 10A of the first embodiment in that the sub duct 40 is not directly connected with the main duct 13. In addition, along with this configuration, it is also different from the above-explained air-condition system 10A of the first embodiment in that the sub blower 42 explained in the second embodiment is provided on the sub duct 40 and a supplemental interior air intake port 27 is provided near the interior air intake port 15 of the main duct 13.

Identical or equivalent components to those in the first embodiments will be labeled with identical reference numbers and their redundant explanations will be omitted. Note that explanations for the sub blower 42 will be also omitted because the sub blower 42 is already explained in the second embodiment.

A supplemental door 41A equivalent to the above-explained selector door 41 is disposed at a connected position of the supplemental interior air intake port 27 with the main duct 13. The supplemental door 41A opens and closes the supplemental interior air intake port 27. Operations of the supplemental door 41A are controlled by the controller 50.

Although it is similar to the first embodiment that the one end of the sub duct 40 is connected with the suction ports 30A and 30B, the other end of the sub duct 40 is formed as an opening 40a. The opening 40a is disposed near the interior air intake port 15 and the supplemental interior air intake port 27, and opened toward the interior air intake port 15 and the supplemental interior air intake port 27.

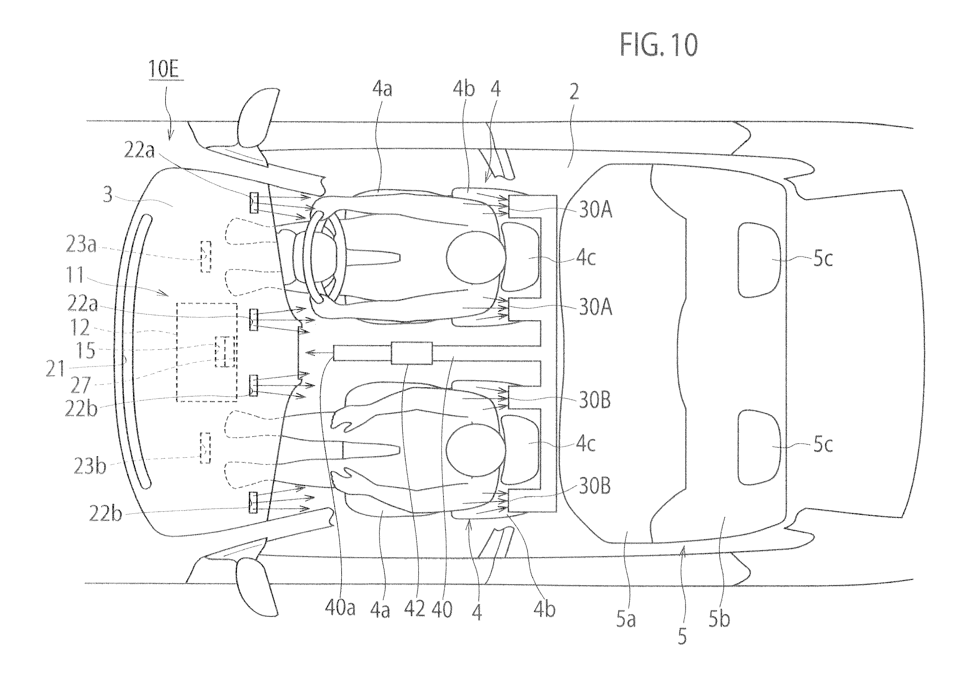

Behaviors of the above-explained air-condition system 10E will be explained. During the zone air-conditioning mode, the sub blower 42 is operated and the conditioned air is suctioned, by a suctioning force of the sub blower 42, from the suction ports 30A and 30B on the front seats 4. Therefore, the conditioned air blown out into the passenger compartment 2 from the air-conditioner 11 is suctioned from the suction ports 30A and 30B on the front seats 4. The suctioned conditioned air flows through the sub duct 40, and it is suctioned into the air-conditioning unit 12 from the interior air intake port 15 (the supplemental interior air intake port 27) just after being blown-out from the opening 40a near the air-conditioning unit 12. Here, in an interior air intake mode, the air blown out from the opening 40a is suctioned into the air-conditioning unit 12 from the interior air intake port 15. At this moment, the supplemental interior air intake port 27 is closed by the supplemental door 41A. On the other hand, in an outside air intake mode, the air blown out from the opening 40a is suctioned into the air-conditioning unit 12 from the supplemental interior air intake port 27. At this moment, the supplemental interior air intake port 27 is opened by the supplemental door 41A. As shown in Fig. 9 and Fig. 10, the conditioned air flows around occupants on the front seats 4 intensively (preferentially), and then it is recovered from the suction ports 30A and 30B. A flow of conditioned air toward a rear section of the passenger compartment behind the suction ports 30A and 30B is also restricted. As a result, the zone air-conditioning zone is formed around the front seats 4 in the passenger compartment 2.

Since desired-temperature conditioned air is generated by using the evaporator 18 and the heater core 19 of the air-conditioning unit 12 in the zone air-conditioning mode, it is not necessary to provide a heat exchanger(s) to be used only for the zone air-conditioning and thereby simplicity of the system configurations and low-cost can be brought. The conditioned air suctioned from the suction ports 30A and 30B flows in the sub duct 40 on a large portion of a return path to the air-conditioned 11, so that it is returned to the air-conditioned 11 while loss of heat (including temperature and humidity) is restricted as much as possible. As a result, air-conditioning load to the air-conditioner 11 reduces. Further, since the conditioned air suctioned from the suction ports 30A and 30B is blown out into the passenger compartment 2 from the opening 40a near the air-conditioning unit 12, a circulation flow without desired temperature is not formed around occupants.

Therefore, according to the air-condition system 10A, simplicity of the system configurations and low-cost can be brought. In addition, comfortable zone air-conditioning can be done while realizing energy-saving due to reduction of air-conditioning load. Furthermore, quick cooling performance and quick heating performance can be improved by zone air-conditioning.

In a vehicle in which an air-conditioned has been already equipped, the above embodiment can be realized by only providing the suction ports 30A and 30B, the sub duct 40 and the sun blower 42, so that it can be easily installed later on.

It is possible to perform the entire air-conditioning mode or the zone air-conditioning mode selectively by controlling the sub blower 42, and the change over between them can be controlled easily.

In addition, the suction ports 30A and 30B are disposed on the front seats 4. Since the front seats 4 are conventional parts inevitably installed, they are the most appropriate for installation of the suction ports 30A and 30B and it is easy to dispose the suction ports 30A and 30B thereon.

Further, the suction ports 30A and 30B are disposed at the upper portions of the seatbacks 4b. Airflows blown out from the vent blow-out ports 22a and 22b are flown toward a vicinity of heads and upper bodies of occupants. And, warm air blown out from the foot vent blow-out ports 23a and 23b forms airflows from beneath toward above in the passenger compartment 2. Therefore, the conditioned air can be suctioned efficiently by the suction ports 30A and 30B disposed at the upper portions of the seatbacks 4b.

Furthermore, the opening 40a of the sub duct 40 is disposed near the interior air intake port 15 (the supplemental interior air intake port 27) of the air-conditioning unit 12, and opened toward the interior air intake port 15 (the supplemental interior air intake port 27). Therefore, the air blown out from the opening 40a is recovered to the inside of the air-conditioning unit 12 reliably and quickly due to a synergy effect of the suctioning force of the blower 17 in the air-conditioning unit 12 and the suction force of the sub blower 42 on the sub duct 40.

Furthermore, the air-conditioning unit 12 includes the supplemental interior air intake port 27 and the supplemental door 41A. Therefore, it is possible to recover, to the inside of the air-conditioning unit 12, the air blown out from the opening 40a by the supplemental interior air intake port 27, so that the zone air-conditioning can be done even in the outside air intake mode.

Furthermore, the temperature sensor S1 for detecting temperature of the conditioned air suctioned from the suction ports 30A and 30B is provided. Therefore, during the zone air-conditioning mode, temperature or the like of conditioned air to be blown out from the air-conditioner 11 can be controlled based on the temperature of the conditioned air that has actually passed through a vicinity of occupants, so that air-conditioning temperature can be controlled adequately.

Furthermore, the suctioning volume through the suction ports 30A and 30B can be adjusted, by controlling the sub blower 42, independently from the blowing volume by the air-conditioner 11.

### (Sixth Embodiment)

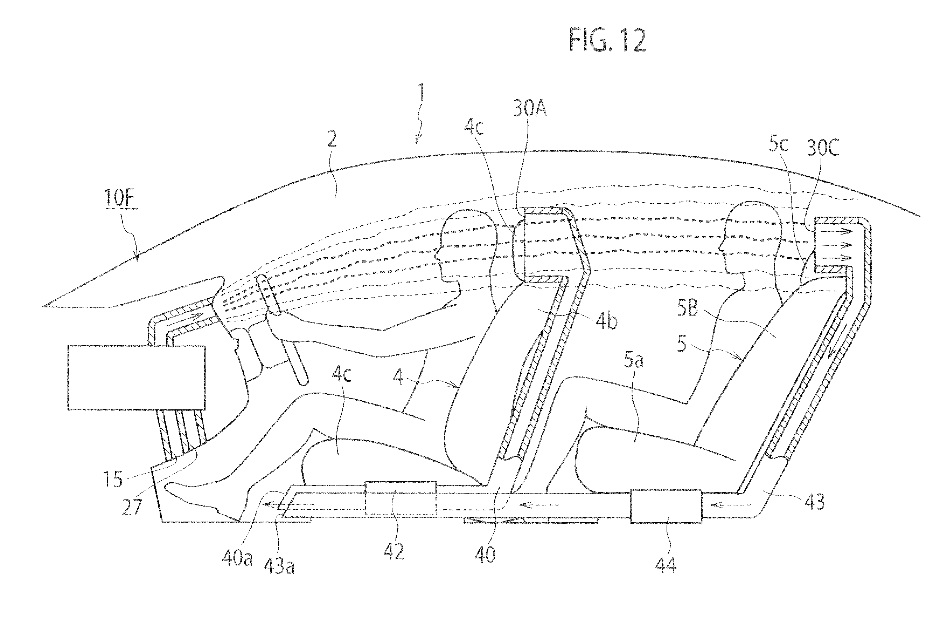

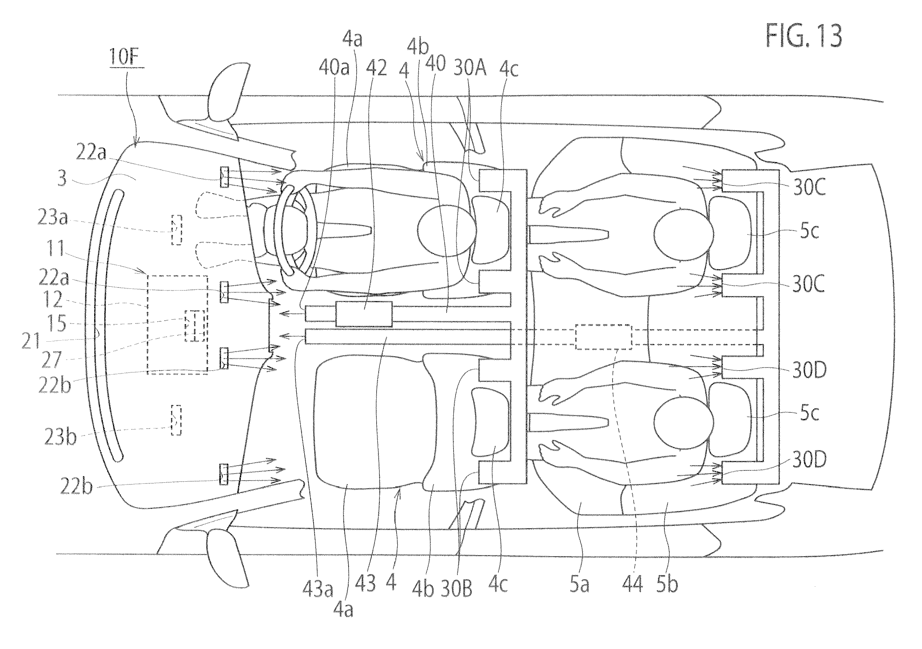

Fig. 12 and Fig. 13 show an air-condition system 10F according to a sixth embodiment. As shown in Fig. 12 and Fig. 13, in the air-condition system 10F, suction ports 30C and 30D provided near the rear seat(s) 5, a duct 43 for returning air suctioned from these suction ports 30C and 30D to a vicinity of the air-conditioning unit 12 of the air-conditioner 11, and a sub blower 44 for suctioning air from the suction ports 30C and 30D into the duct 43 are further provided, in addition to the system configurations of the fifth embodiment.

Identical or equivalent components to those in the fifth embodiments will be labeled with identical reference numbers and their redundant explanations will be omitted.

The suction ports 30C for the right rear seat 5 (or the suction ports 30D for the left rear seat 5) are disposed at an upper portion of the seatback 5b and on both sides of the headrest 5c. Total four of the suction ports 30C and 30D are opened just behind upper bodies of occupants on the rear seats 5.

The other end of the duct 43 for the rear seats is formed as an opening 43a. Similarly to the opening 40a of the sub duct 40, the opening 43a is disposed near the interior air intake port 15 and the supplemental interior air intake port 27, and opened toward the interior air intake port 15 and the supplemental interior air intake port 27.

Behaviors of the above-explained air-condition system 10F will be explained. The conditioned air is suctioned from the suction ports 30A and 30B on the front seats 4, so that a zone air-conditioning zone is formed around the front seats 4 in the passenger compartment 2, as explained in the first embodiment. In addition, as shown in Fig. 12 and Fig. 13, the conditioned air is suctioned from the suction ports 30C and 30D on the rear seats 5, so that a zone air-conditioning zone is also formed around the rear seats 5 in the passenger compartment 2. Therefore, the conditioned air blown out into the passenger compartment 2 from the air-conditioner 11 passes around occupants on the front seats 4, and then it is suctioned from the suction ports 30C and 30D as well. The suctioned conditioned air flows through the sub duct 43, and it is suctioned into the air-conditioning unit 12 from the interior air intake port 15 (the supplemental interior air intake port 27) just after being blown-out from the opening 43a near the air-conditioning unit 12. The conditioned air flows around occupants on the rear seats 5, in addition to the front seats 4, intensively (preferentially), and then it is recovered from the suction ports 30C and 30D. A flow of conditioned air toward a rear section of the passenger compartment behind the suction ports 30C and 30D is restricted. As a result, the zone air-conditioning zone is formed around the front seats 4 and the rear seats 5 in the passenger compartment 2.

The air-condition system 10F according to the present embodiment is especially effective for a vehicle with the passenger compartment 2 having a large volumetric capacity, such as a box-shaped van.

### (Seventh Embodiment)

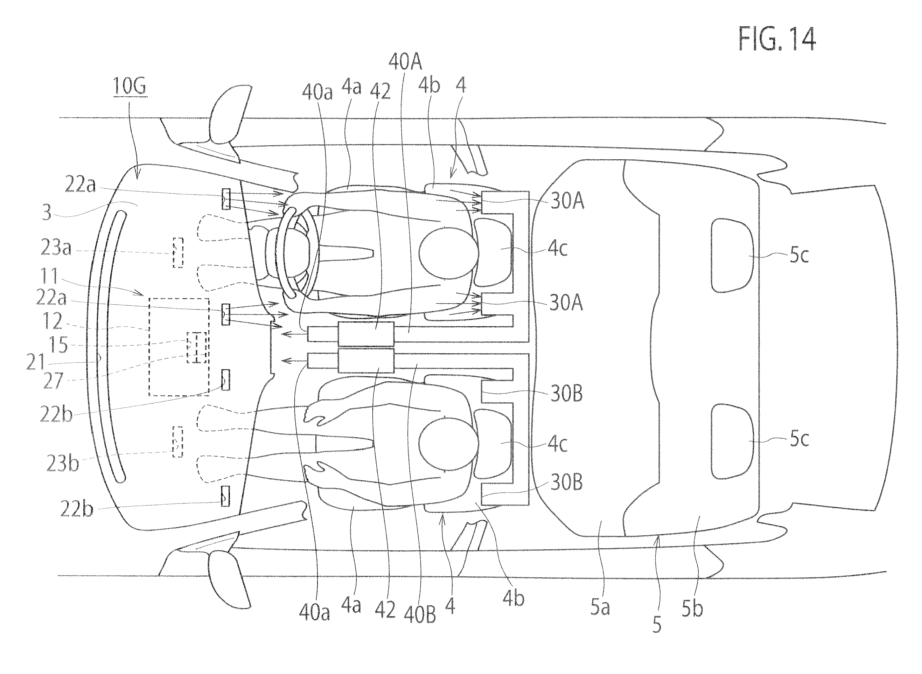

Fig. 14 shows an air-condition system 10G according to a seventh embodiment. As shown in Fig. 14, the air-condition system 10G is different from the above-explained air-condition system 10E of the fifth embodiment in that the suction ports 30A on the right front seat 4 and the suction ports 30B on the left front seat 4 are connected with sub ducts 40A and 40B that are independent from each other, respectively. Each of the openings 40a the sub ducts 40A and 40B is disposed near the interior air intake port 15 and the supplemental interior air intake port 27, and opened toward the interior air intake port 15 and the supplemental interior air intake port 27.

Identical or equivalent components to those in the first embodiments or the fifth embodiment will be labeled with identical reference numbers and their redundant explanations will be omitted.

In the present embodiment, it can be possible to form the zone air-conditioning zone around the both left and right front seats 4, to form the zone air-conditioning zone around only the right front seat 4 (a state shown in Fig. 14), or to form the zone air-conditioning zone around only the left front seat 4.

Although the supplemental interior air intake port 27 is provided on the main duct 13 of the air-conditioning unit 12 and the supplemental door 41A for opening and closing the supplemental interior air intake port 27 is provided in the above-explained fifth to seventh embodiments, the supplemental interior air intake port 27 and the supplemental door 41A may not be provided. In this case, when the zone air-conditioning mode is selected during an outside air intake mode, the intake doors 16a and 16b are controlled so as to open both of the outside air intake port 14 and the interior air intake port 15. According to this, it becomes unnecessary to provide the supplemental interior air intake port 27 and the supplemental door 41A, so that the system configurations can be made simple.

Note that, in any of the above-explained first to seventh embodiment, it may be done to provide suction ports near all seats and provide sub ducts for the suction ports, respectively. According to this, zone air-conditioning can be done for each occupant, so that zone air-conditioning optimized with vehicle occupancy can be done. In addition, although the suction ports 30A to 30D are provided on the seats 4 or 5, they may be provided anywhere as long as near seats for occupants. Providing the suction ports 30A to 30D near the seats 4 or 5 makes their later-on installation easy.

## Claims

1. An air-condition system for a vehicle, comprising:
an air-conditioner that includes a main blower, a main duct and a heat exchanger, and is configured to convert air suctioned into the main duct into desired conditioned air by the heat exchanger and to blow out the conditioned air into a passenger compartment;
a suction port disposed near a seat for an occupant; and
a sub duct of which one end is connected to the suction port to suction air from the suction port, wherein
the air-conditioner suctions air that has been suctioned into the sub duct into the main duct, and blows the air into the passenger compartment again.

2. The air-condition system according to claim 1, wherein
another end of the sub duct is connected to the main duct, and the suction port and the main duct are communicated with each other by the sub duct.

3. The air-condition system according to claim 2, further comprising
a selector door capable of shutting communication of an inside of the sub duct with an inside of the main duct.

4. The air-condition system according to claim 2 or 3, wherein
the other end of the sub duct is connected to the main duct at a position upstream from the main blower.

5. The air-condition system according to claim 4, further comprising
a sub blower for introducing air into the sub duct.

6. The air-condition system according to claim 2 or 3, wherein
the sub duct is connected to the main duct at a position between the blower and the heat exchanger, and
the system further comprises a sub blower for introducing air from the suction port into the sub duct.

7. The air-condition system according to one of claims 2 to 6, wherein
the suction port is provided on a seat.

8. The air-condition system according to claim 7, wherein
the suction port is disposed at an upper portion of a seatback of the seat.

9. The air-condition system according to one of claims 2 to 8, further comprising
a temperature sensor for detecting temperature of air suctioned from the suction port.

10. The air-condition system according to claim 1, further comprising
a sub blower for introducing air from the suction port into the sub duct, wherein
another end of the sub duct is opened near the air-conditioner to form an opening.

11. The air-condition system according to claim 10, wherein
the suction port is provided on a seat.

12. The air-condition system according to claim 11, wherein
the suction port is disposed at an upper portion of a seatback of the seat.

13. The air-condition system according to any one of claims 10 to 12, wherein
the opening of the sub duct is disposed near an interior air intake port of the air-conditioner, and opened toward the interior air intake port.

14. The air-condition system according to any one of claims 10 to 13, wherein
the air-conditioner includes a supplemental interior air intake port, and a supplemental door for opening and closing the supplemental interior air intake port.

15. The air-condition system according to any one of claims 10 to 14, further comprising
a temperature sensor for detecting temperature of air suctioned from the suction port.
